# EUROPÄISCHE PATENTSCHRIFT

(11) **EP 3 271 165 B1**
(45) Veröffentlichungstag und Bekanntmachung des Hinweises auf die Patenterteilung: **26.05.2021**
(21) Anmeldenummer: 16705777.7
(22) Anmeldetag: 20.02.2016
(51) Int. Cl.: B31B 50/64

(54) **DORNRAD ZUR HERSTELLUNG VON VERPACKUNGEN**
MANDREL WHEEL FOR PRODUCING PACKAGINGS
ROUE À MANDRINS SERVANT À FABRIQUER DES EMBALLAGES

(30) Priorität: 19.03.2015 DE 102015104102
(43) Veröffentlichungstag der Anmeldung: 24.01.2018
(73) Patentinhaber: SIG Technology AG, 8212 Neuhausen am Rheinfall (CH)
(72) Erfinder: HEIL, Michael, 41179 Mönchengladbach (DE)
(74) Vertreter: Cohausz & Florack
(86) Internationale Anmeldenummer: PCT/EP2016/053614
(87) Internationale Veröffentlichungsnummer: WO 2016/146342

(56) Entgegenhaltungen:
- EP-A1- 0 589 157
- US-A- 3 566 762

## Beschreibung

Die Erfindung betrifft ein Dornrad zur Herstellung von Verpackungen, umfassend: eine Dornradwelle mit einer Mittelachse, mehrere an der Dornradwelle befestigte Dorne, einen Zulauf für ein Kühlmedium, und einen Ablauf für das Kühlmedium, wobei die Dorne wenigstens eine Dorngruppe bilden, deren Dorne in einer Ebene senkrecht zur Mittelachse der Dornradwelle angeordnet sind, und wobei jeder Dorn einen Hohlraum für das Kühlmedium aufweist, der mit einem Einlass und mit einem davon getrennten Auslass verbunden ist.

Verpackungen können auf unterschiedliche Weisen und aus verschiedensten Materialien hergestellt werden. Eine weit verbreitete Möglichkeit ihrer Herstellung besteht darin, aus dem Verpackungsmaterial einen Zuschnitt herzustellen, aus dem durch Falten und weitere Schritte zunächst ein Packungsmantel und schließlich eine Verpackung entsteht. Diese Herstellungsart hat unter anderem den Vorteil, dass die Zuschnitte sehr flach sind und somit platzsparend gestapelt werden können. Auf diese Weise können die Zuschnitte bzw. Packungsmäntel an einem anderen Ort hergestellt werden als die Faltung und Befüllung der Packungsmäntel erfolgt. Als Material werden häufig Verbundstoffe eingesetzt, beispielsweise ein Verbund aus mehreren dünnen Lagen aus Papier, Pappe, Kunststoff oder Metall, insbesondere Aluminium. Derartige Verpackungen finden insbesondere in der Lebensmittelindustrie große Verbreitung.

Auf dem Gebiet der Verpackungstechnik sind zahlreiche Vorrichtungen und Verfahren bekannt, mit denen flach zusammengefaltete Packungsmäntel aufgefaltet, einseitig verschlossen, mit Inhalten befüllt und anschließend vollständig verschlossen werden können.

Eine besondere Herausforderung stellt das Verschließen der Packungsmäntel dar, weil durch das Verschließen eine zuverlässige Abdichtung der Packungsmäntel erreicht werden muss, die auch dem anschließenden Transport und anderen Belastungen standhalten muss. Das Verschließen erfolgt oftmals in mehreren Schritten: Zunächst wird der Packungsmantel in dem zu verschließenden Bereich erwärmt ("aktiviert"). Anschließend werden die gegenüberliegenden Seiten des Packungsmantels in dem zu verschließenden Bereich zusammengepresst ("verpresst"). Der Zusammenhalt zwischen den zusammengepressten Bereichen wird beispielsweise dadurch erreicht, dass eine innenliegende Kunststofflage vorgesehen ist, die bei der Erwärmung zähflüssig wird und somit bei der anschließenden Verpressung eine Verklebung bildet. Dieser Vorgang wird auch als "Versiegeln" bezeichnet.

Zum Bearbeiten, insbesondere zum Verschließen der Unterseite der Packungsmäntel werden häufig so genannte "Dornräder" eingesetzt, auf deren radial abstehende Dorne die noch unbefüllten Packungsmäntel aufgeschoben werden. Der Querschnitt der Dorne entspricht etwa dem Querschnitt der herzustellenden Verpackungen, so dass die Packungsmäntel bereits beim Aufschieben auf die Dorne die gewünschte Querschnittsform einnehmen.

Während der Packungsmantel sich auf dem Dorn befindet, erfolgt die Bearbeitung des Packungsmantels taktweise im Bereich des abstehenden Endes des Dornes. Dies hat einerseits den Vorteil, dass die Packungsmäntel durch eine Drehung des Dornrades nacheinander von unterschiedlichen Werkzeugen bearbeitet werden können. Beispielsweise kann in einer ersten Dornradstellung eine Erhitzung erfolgen und im Anschluss daran kann in einer zweiten Dornradstellung eine Verpressung erfolgen. Ein weiterer Vorteil von einer Bearbeitung der Packungsmäntel auf einem Dornrad liegt darin, dass die Form der abstehenden Enden der Dorne an die Form der Unterseite der herzustellenden Verpackungen angepasst werden kann, so dass die Enden der Dorne bei der Verpressung als Widerlager dienen können.

Dornräder zur Herstellung von Verpackungen sind beispielweise aus der DE 103 58 750 A, der EP 0 589 157 A1, der DE 19 53 727 A, der US 3,207,049 A und der US 3,303,761 A bekannt.

Eine Herausforderung bei dem Einsatz von Dornrädern liegt in den hohen thermischen Belastungen der Dorne, die infolge von Wärmestrahlung (z.B. durch Heizvorrichtungen) oder Druck (z.B. durch Pressvorrichtungen) auf die Dorne einwirken. In den zuvor genannten Dokumenten werden daher unterschiedliche Versuche beschrieben, die Dorne hohl zu gestalten und durch ein Kühlmedium zu kühlen.

Die beschrieben Lösungen haben sich jedoch als nachteilig erwiesen. Ein Nachteil einiger Lösungen liegt darin, dass keine durchgehende Trennung von Zu- und Ableitung des Kühlmediums erfolgt, was eine Vermischung von "frischem" (also kaltem) Kühlmedium und bereits gebrauchtem (also wärmerem) Kühlmedium zur Folge hat. Ein Nachteil anderer Lösungen liegt darin, dass nicht jeder Dorn mit "frischem" Kühlmedium versorgt wird, sondern dass einige Dorne mit Kühlmedium durchströmt werden, das bereits zuvor einen anderen Dorn durchströmt hat und sich dabei bereits aufgewärmt hat ("Reihenschaltung"). Beide Lösungen führen zu einer verringerten Kühlleistung und somit zu einer Begrenzung der Geschwindigkeit, mit der Packungsmäntel auf dem Dornrad bearbeitet werden können. Die Nachteile sind unter anderem dadurch begründet, dass der Anschluss jedes Dornes an eine separate Zu- und Ableitung für das Kühlmedium sich aufgrund der drehbaren Lagerung der Dornräder als konstruktiv aufwändig erwiesen hat. Besonders aufwändig ist die Einrichtung einer wirksamen Kühlvorrichtung bei Dornrädern mit mehreren Dorngruppen.

Die US 3,566,762 A zeigt ein gattungsgemäßes Dornrad zur Herstellung von Verpackungen, wobei die Dorne des Dornrads wenigstens zwei Dorngruppen bilden und jeder Dorn einen Hohlraum für Kühlmedium aufweist, der mit einem Einlass und mit einem davon getrennten Auslass verbunden ist, und wobei ein separates Verteilelement vorgesehen ist, das alle Einlässe einer Dorngruppe mit dem Zulauf verbindet und das alle Auslässe derselben Dorngruppe mit dem Ablauf verbindet.

Der Erfindung liegt daher die Aufgabe zugrunde, ein gattungsgemäßes Dornrad zur Herstellung von Verpackungen derart auszugestalten und weiterzubilden, dass eine verbesserte Kühlung der Dorne erreicht wird und dass ohne strukturelle Anpassung der Verteilelemente eine Versorgung mehrerer Dorngruppen mit Kühlmedium ermöglicht wird.

Diese Aufgabe wird mit einem Dornrad mit den Merkmalen des Anspruchs 1 gelöst.

Das erfindungsgemäße Dornrad zur Herstellung von Verpackungen zeichnet sich zunächst durch eine Dornradwelle mit einer Mittelachse aus. Die Dornradwelle ist vorzugsweise zylindrisch geformt und die Mittelachse verläuft in Längsrichtung - also in axialer Richtung - zentral durch die Dornradwelle hindurch. Die Dornradwelle kann aus Metall, beispielsweise aus Stahl, insbesondere aus einer Chrom-Nickel-Legierung (CrNi) hergestellt sein. Das Dornrad umfasst zudem mehrere an der Dornradwelle befestigte Dorne. Die Befestigung dient dem Zweck, dass sich die Dorne bei einer Drehung der Dornradwelle um ihre Mittelachse ebenfalls um die Mittelachse der Dornradwelle drehen. Gleichwohl kann es sich um eine lösbare Befestigung handeln, um die Dorne austauschen zu können. Die Querschnittsfläche der Dorne kann rechteckig, insbesondere quadratisch gestaltet sein. Weiterhin umfasst das Dornrad einen Zulauf und einen Ablauf für ein Kühlmedium. Der Zulauf und der Ablauf sind separat ausgestaltet, um eine Vermischung von zulaufendem und ablaufendem Kühlmedium zu vermeiden. Die an dem Dornrad befestigten Dorne bilden wenigstens zwei Dorngruppen, deren Dorne jeweils in einer Ebene senkrecht zur Mittelachse der Dornradwelle angeordnet sind. Die Anordnung in einer Ebene dient dem Zweck, dass die Dorne derselben Dorngruppe durch eine Drehung der Dornradwelle nacheinander in dieselben Positionen gebracht werden können, um dort eine Bearbeitung der Packungsmäntel durch unterschiedliche ortsfeste Werkzeuge zu ermöglichen. Jeder Dorn weist schließlich einen Hohlraum für das Kühlmedium auf, der mit einem Einlass und mit einem davon getrennten Auslass verbunden ist. Die Trennung von Einlass und Auslass der Dorne dient - ebenso wie die Trennung von Zulauf und Ablauf des Dornrades - dem Zweck, eine Vermischung von zulaufendem und ablaufendem Kühlmedium zu vermeiden.

Das Dornrad wird erfindungsgemäß ergänzt durch mehrere Verteilelemente, wobei jedes Verteilelement alle Einlässe einer Dorngruppe mit dem Zulauf verbindet und alle Auslässe derselben Dorngruppe mit dem Ablauf verbindet. Das Verteilelement stellt also eine Verbindung, insbesondere eine direkte Verbindung zwischen jedem Einlass einer Dorngruppe und dem Zulauf des Dornrades her. Ebenso stellt das Verteilelement eine Verbindung, insbesondere eine direkte Verbindung zwischen jedem Auslass einer Dorngruppe und dem Ablauf des Dornrades her. Vorzugsweise ist die Verbindung zwischen den Einlässen und dem Zulauf durchgehend getrennt von der Verbindung zwischen den Auslässen und dem Ablauf. Das Verteilelement sorgt also dafür, dass alle Dorne einer Dorngruppe von dem Zulauf des Dornrades mit "frischem" Kühlmedium versorgt werden, also mit einem Kühlmedium, das nicht bereits zuvor zur Kühlung eines anderen Dornes derselben oder einer anderen Dorngruppe eingesetzt wurde. Ebenso sorgt das Verteilement dafür, dass das Kühlmedium aus allen Dornen einer Dorngruppe zum Ablauf des Dornrades geleitet wird, ohne auf dem Weg dorthin zur Kühlung weiterer Dorne derselben oder einer anderen Dorngruppe verwendet zu werden. Das Verteilelement führt daher zu einer wesentlich effizienteren Kühlung der Dorne. Mit der gleichen Durchflussmenge an Kühlmedium kann eine größere Kühlleistung erreicht werden bzw. die gleiche Kühlleistung kann mit einer geringeren Durchflussmenge an Kühlmedium erreicht werden. Ein weiterer Vorteil des Einsatzes von wenigstens einem separaten Verteilelement liegt daran, dass das Verteilelement nachgerüstet oder ausgetauscht werden kann und an die Anzahl und Lage der Dorne und Dorngruppen eines Dornrades angepasst werden kann. Das Verteilelement kann aus Kunststoff, beispielsweise aus einem thermoplastischen Kunststoff wie POM (Polyoxymethylen) hergestellt sein. Kunststoff hat den Vorteil einer besonders variablen Formgebung.

Durch die zwei oder mehr Dorngruppen in verschiedenen Ebenen kann die Produktionsleistung des Dornrades erhöht werden, denn es können mehrere Produktionslinien von Packungsmänteln gleichzeitig verarbeitet werden. Erfindungsgemäß sind bei Dornrädern mit mehreren Dorngruppen auch mehrere Verteilelemente vorgesehen, die beispielsweise aneinander gereiht oder ineinander gesteckt werden können. Bei entsprechender Gestaltung der Verteilelemente kann auch bei mehreren Dorngruppen erreicht werden, dass alle Dorne von dem Zulauf des Dornrades mit "frischem" Kühlmedium versorgt werden, also mit einem Kühlmedium, das nicht bereits zuvor zur Kühlung eines anderen Dornes derselben oder einer anderen Dorngruppe eingesetzt wurde.

Bei dem Dornrad ist vorgesehen, dass die Dornradwelle eine Hohlwelle ist. Die Gestaltung der Dornradwelle als Hohlwelle hat zunächst den Vorteil einer geringeren Masse, die bei einem taktweisen Betrieb des Dornrades zu einem geringeren Energieverbrauch führt. Ein weiterer Vorteil der hohlen Bauweise liegt darin, dass der Innenraum der Dornradwelle für die Versorgung der Dorne mit dem Kühlmedium genutzt werden kann.

Das Dornrad ist so ausgebildet, dass das Verteilelement in der Dornradwelle angeordnet ist. Eine Anordnung des Verteilelements in der Dornradwelle hat gegenüber einer Anordnung außerhalb der Dornradwelle den Vorteil einer besonders platzsparenden Bauweise. Zudem kann durch die zentrale Anordnung innerhalb der Dornradwelle eine symmetrische Bauweise erreicht werden, die dazu führt, dass das Kühlmedium für die Kühlung aller Dorne einer Dorngruppe gleich weite Strömungswege zurücklegen muss. Dies erlaubt eine gleichmäßige Kühlung aller Dorne, wodurch Qualitätsschwankungen bei der Bearbeitung der Packungsmäntel vermieden werden. Ein weiterer Vorteil liegt darin, dass das Verteilelement bei einer Anordnung innerhalb der Dornradwelle vor mechanischen und thermischen Belastungen geschützt wird.

In weiterer Ausgestaltung des Dornrades ist vorgesehen, dass das Verteilelement wenigstens einen Stützabschnitt aufweist, dessen Außendurchmesser etwa dem Innendurchmesser der Dornradwelle entspricht. Durch den Stützabschnitt ("Verteilerkopf") kann das Verteilelement präzise in der Dornradwelle positioniert werden, so dass das Verteilelement lediglich in axialer Richtung (also entlang der Mittelachse der Dornradwelle) verschoben und/oder verdreht werden kann, während eine Verschiebung in radialer Richtung (also quer zur Mittelachse der Dornradwelle) ausgeschlossen ist. Vorzugsweise ist zwischen dem Stützabschnitt und der Innenwand der Dornradwelle eine Spielpassung oder eine Übergangspassung vorgesehen. Das Verteilelement kann im Bereich des Stützabschnittes eine Dichtung aufweisen, um zu verhindern, dass Kühlmedium zwischen dem Stützabschnitt und der Innenwand der Dornradwelle hindurchströmt.

Das Verteilelement kann nach einer weiteren Ausbildung des Dornrades einen axial verlaufenden Innenkanal aufweisen. Der Innenkanal kann entweder für die Zuleitung oder alternativ für die Ableitung des Kühlmediums genutzt werden. Vorzugsweise erstreckt sich der Innenkanal in axialer Richtung durch die gesamte Länge des Verteilelements hindurch. Auf diese Weise kann durch eine Aneinanderreihung von mehreren Verteilelementen ein Innenkanal gebildet werden, der mehrere Verteilelemente durchläuft. Der Innenkanal kann beispielsweise zylindrisch geformt sein und einen beliebigen, an die Strömungsmenge angepassten Durchmesser aufweisen.

Zu dieser Ausbildung wird weiter vorgeschlagen, dass das Verteilelement wenigstens einen von dem Innenkanal abzweigenden und radial verlaufenden Verteilkanal aufweist. Die Verteilkanäle zweigen von dem Innenkanal ab, so dass durch die Verteilkanäle eine Verbindung zwischen dem Innenkanal und den einzelnen Dornen einer Dorngruppe ausgebildet werden kann. Vorzugsweise entspricht die Anzahl und die Lage der Verteilkanäle der Anzahl und der Lage der ihnen zugeordneten Dorne. Bevorzugt sind die Verteilkanäle in gleichmäßigen Abständen über den Umfang des Verteilelements verteilt. Vorzugsweise weist das Verteilelement wenigstens vier, insbesondere wenigstens sechs Verteilkanäle auf.

Eine weitere Ausgestaltung des Dornrades sieht vor, dass das Verteilelement wenigstens einen axial verlaufenden Außenkanal aufweist. Wie der Innenkanal kann auch der Außenkanal entweder für die Zuleitung oder alternativ für die Ableitung des Kühlmediums genutzt werden. Vorzugsweise ist der Außenkanal durchgehend von dem Innenkanal getrennt, um eine Vermischung von zuströmendem und abströmendem Kühlmedium zu vermeiden. Da sowohl der Innenkanal als auch der Außenkanal axial verlaufen, sind der Innenkanal und der Außenkanal konzentrisch angeordnet.

Zu dieser Ausgestaltung wird weiter vorgeschlagen, dass der Außenkanal wenigstens abschnittsweise als umlaufender Absatz ausgestaltet ist, dessen Außendurchmesser geringer ist als der Innendurchmesser der Dornradwelle. Durch diese Ausgestaltung wird der Außenkanal einseitig durch die Innenwand der Dornradwelle begrenzt. Aufgrund der vollständig umlaufenden Gestaltung des Außenkanals ist ein einzelner Außenkanal ausreichend, um eine Verbindung zu allen Dornen einer Dorngruppe zu erzeugen. Alternativ hierzu kann in dem Verteilelement für jeden Dorn ein separater Außenkanal vorgesehen sein. In jedem Fall soll der wenigstens eine Außenkanal derart gestaltet und angeordnet sein, dass er das aus den Dornen austretende Kühlmedium aufnehmen kann und zu dem Ablauf leiten kann.

Im Hinblick auf den Außenkanal kann weiter vorgesehen sein, dass der Außenkanal wenigstens abschnittsweise als Axialbohrung ausgestaltet ist. Um eine zuverlässige Ableitung des Kühlmediums auch bei dem Einsatz mehrerer aneinander gereihter Verteilelemente sicherzustellen, kann vorgesehen sein, dass die Außenkanäle abschnittsweise, insbesondere im Bereich des Stützabschnittes, als Axialbohrungen ausgestaltet sind. Um eine Vermischung von frischem Kühlmedium und bereits erwärmten Kühlmedium zu verhindern, sind die Axialbohrungen vorzugsweise zwischen den ebenfalls im Stützabschnitt angeordneten Verteilkanälen angeordnet.

In weiterer Ausbildung des Dornrades wird vorgeschlagen, dass die Länge des Verteilelements dem Abstand zwischen den Ebenen von zwei benachbarten Dorngruppen entspricht. Auf diese Weise kann jedes Verteilelement individuell an die jeweilige Dorngruppe und insbesondere an die Lage der Einlässe und Auslässe dieser Dorngruppe angepasst werden. Bei Dornrädern mit zwei oder mehr Dorngruppen können mehrere Verteilelemente hintereinander in die hohle Dornradwelle eingeschoben werden und gemeinsam eine durchgehende Zuleitung (z.B. durch die Innenkanäle) bzw. eine durchgehende Ableitung (z.B. durch die Außenkanäle) für das Kühlmedium bilden.

Nach einer weiteren Ausgestaltung des Dornrades ist vorgesehen, dass der Hohlraum für das Kühlmedium durch zwei miteinander verbundene Kühlkanäle gebildet wird. Indem der Hohlraum durch zwei Kühlkanäle gebildet wird, kann das Kühlmedium zunächst durch den ersten Kühlkanal von der Dornradwelle durch den gesamten Dorn hindurch bis zum abstehenden Ende des Dornes ("Dornplatte") geleitet werden, dort die Wärme aufnehmen und anschließend durch den zweiten Kühlkanal zurück in die Dornradwelle geleitet werden. Durch zwei separate Kühlkanäle pro Dorn kann also eine Trennung von zuströmendem und abströmendem Kühlmedium erreicht werden, was zu einer effizienteren Kühlung der Dorne führt.

Eine weitere Ausbildung des Dornrades sieht vor, dass der Zulauf für das Kühlmedium und der Ablauf für das Kühlmedium an gegenüberliegenden Enden der Dornradwelle angeordnet sind. Durch diese Ausgestaltung wird eine weitgehende räumliche Trennung von zuströmendem (kaltem) Kühlmedium und abströmendem (wärmerem) Kühlmedium erreicht. Auf diese Weise wird weitgehend verhindert, dass das zuströmende Kühlmedium durch das abströmende Kühlmedium erwärmt wird und im Vergleich zu einer einseitigen Anordnung von Zulauf und Ablauf auf derselben Seite der Dornradwelle eine effizientere Kühlung erreicht.

Beim erfindungsgemäßen Dornrad ist vorgesehen, dass das Dornrad wenigstens zwei, insbesondere wenigstens vier oder wenigstens sechs Dorngruppen umfasst. Eine weitere Ausbildung der Erfindung sieht vor, dass jede Dorngruppe wenigstens vier Dorne, insbesondere wenigstens sechs Dorne umfasst. Durch eine größere Anzahl an Dorngruppen können mehrere Linien von Packungsmänteln gleichzeitig bearbeitet werden. Durch eine größere Anzahl von Dornen pro Dorngruppe kann eine größere Anzahl von Bearbeitungsschritten an den Packungsmänteln durchgeführt werden.

Die Erfindung wird nachfolgend anhand einer lediglich ein bevorzugtes Ausführungsbeispiel darstellenden Zeichnung näher erläutert. In der Zeichnung zeigen:
- Fig. 1:: ein erfindungsgemäßes Dornrad zur Herstellung von Verpackungen in einer Seitenansicht, und
- Fig. 2:: eine vergrößerte Ansicht des Dornrades aus Fig. 1.

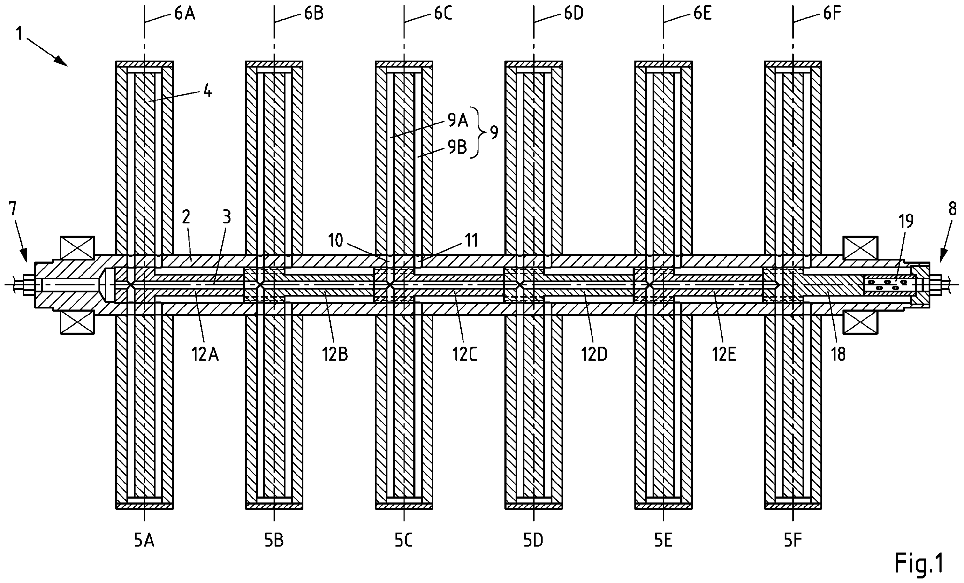

Fig. 1 zeigt erfindungsgemäßes Dornrad 1 zur Herstellung von Verpackungen in einer Seitenansicht. Das Dornrad 1 umfasst eine Dornradwelle 2, die entlang einer zentral angeordneten Mittelachse 3 verläuft. Die Dornradwelle 2 kann als Hohlwelle ausgeführt sein. An der Dornradwelle 2 sind mehrere Dorne 4 befestigt. Die Dorne 4 bilden Dorngruppen 5A bis 5F, deren Dorne 4 jeweils in einer Ebene 6A bis 6F senkrecht zur Mittelachse 3 der Dornradwelle 2 angeordnet sind. Bei dem in Fig. 1 gezeigten und insoweit bevorzugten Dornrad 1 umfasst jede Dorngruppe 5A bis 5F vier Dorne 4, so dass insgesamt vierundzwanzig Dorne 4 vorhanden sind. Die Dorne 4 einer Dorngruppe 5A bis 5F sind vorzugsweise gleichmäßig über den Umfang der Dornradwelle verteilt, so dass sich bei einer Konfiguration mit vier Dornen 4 pro Dorngruppe 5A bis 5F ein Dornabstand von 90° ergibt.

Das in Fig. 1 gezeigte Dornrad 1 umfasst weiterhin einen Zulauf 7 für ein Kühlmedium sowie einen Ablauf 8 für ein Kühlmedium. Der Zulauf 7 und der Ablauf 8 sind an gegenüberliegenden Enden des Dornrades 1 angeordnet. Jeder Dorn 4 weist einen Hohlraum 9 für das Kühlmedium auf, wobei der Hohlraum durch zwei miteinander verbundene Kühlkanäle 9A, 9B gebildet sein kann. Jeder Hohlraum 9 ist mit einem Einlass 10 und einem davon getrennten Auslass 11 verbunden. Das Dornrad 1 umfasst zudem mehrere Verteilelemente 12A bis 12E. Die Verteilelemente 12A bis 12E verbinden die Einlässe 10 einer Dorngruppe 5A bis 5F mit dem Zulauf 7 und die Auslässe 11 derselben Dorngruppe 5A bis 5F mit dem Ablauf 8. Bei dem in Fig. 1 gezeigten und insoweit bevorzugten Dornrad 1 entspricht die Länge der Verteilelemente 12A bis 12E dem Abstand zwischen den Ebenen 6A bis 6F von zwei benachbarten Dorngruppen 5A bis 5F. Auf diese Weise kann eine unterschiedliche Anzahl von Verteilelementen 12A bis 12E zusammengesteckt werden, wodurch eine Anpassung an die Anzahl der Dorngruppen 5A bis 5F möglich ist.

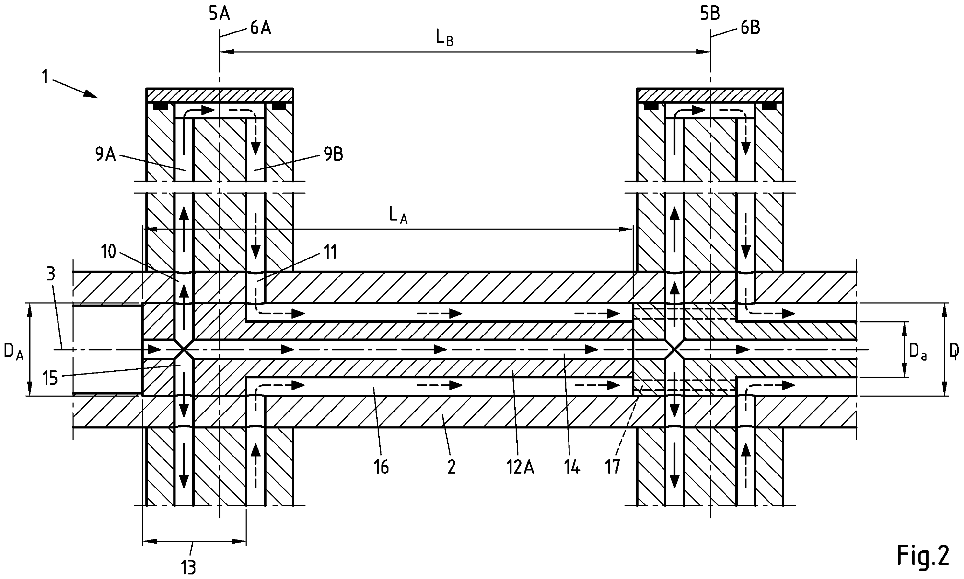

In Fig. 2 ist eine vergrößerte Ansicht des Dornrades 1 aus Fig. 1 dargestellt. In der vergrößerten Ansicht sind insbesondere der Aufbau des Verteilelements 12A und seine Anordnung in der Dornradwelle 2 erkennbar. Die übrigen - in Fig. 2 nicht dargestellten - Verteilelemente 12B bis 12E weisen einen identischen Aufbau auf. Das Verteilelement 12A weist einen Stützabschnitt 13 auf, dessen Außendurchmesser D_{A} etwa dem Innendurchmesser D_{I} der Dornradwelle entspricht. Durch eine derartige Gestaltung des Stützabschnitts 13 wird das Verteilelement 12A präzise in der Dornradwelle 2 positioniert werden, so dass das Verteilelement 12A lediglich in axialer Richtung (also entlang der Mittelachse 3) verschoben oder verdreht werden kann, während eine Verschiebung in radialer Richtung (also quer zur Mittelachse 3) ausgeschlossen ist.

Das Verteilelement 12A weist einen axial verlaufenden Innenkanal 14 auf, der sich durch das gesamte Verteilelement 12A hindurch erstreckt. Von diesem Innenkanal 14 zweigen mehrere radial verlaufende Verteilkanäle 15 ab. Vorzugsweise entspricht die Anzahl und Lage der Verteilkanäle 15 der Anzahl und Lage der dem Verteilelement 12A zugeordneten Dorne 4. Dies führt dazu, dass das in Fig. 2 dargestellte Verteilelement 12A vier Verteilkanäle 15 aufweist, die in gleichmäßigen Abständen von 90° über den Umfang des Verteilelements 12A verteilt sind. Die Verteilkanäle 15 sind vorzugsweise im Bereich des Stützabschnittes 13 angeordnet, so dass die äußeren Enden der Verteilkanäle 15 bis zur Innenfläche der hohlen Dornradwelle 2 führen und dort das Kühlmedium in die Einlässe 10 der Dorne 4 eintreten kann. Neben dem Innenkanal 14 weist das Verteilelement 12A auch wenigstens einen axial verlaufenden Außenkanal 16 auf. Es kann ein einzelner Außenkanal 16 vorgesehen sein, wobei in diesem Fall bevorzugt wird, dass der Außenkanal 16 wenigstens abschnittsweise als umlaufender Absatz ausgestaltet ist, dessen Außendurchmesser Dₐ geringer ist als der Innendurchmesser D_{I} der Dornradwelle 2. Alternativ hierzu kann in dem Verteilelement 12A auch für jeden Dorn 4 ein separater Außenkanal 16 vorgesehen sein. In jedem Fall muss der wenigstens eine Außenkanal 16 derart gestaltet und angeordnet sein, dass er das aus den Auslässen 11 der Dorne 4 austretende Kühlmedium aufnehmen kann und zu dem Ablauf 8 leiten kann. Um eine zuverlässige Ableitung des Kühlmediums auch bei dem Einsatz mehrerer aneinander gereihter Verteilelemente 12A bis 12E sicherzustellen, kann vorgesehen sein, dass die Außenkanäle 16 im Bereich des Stützabschnittes 13 als Axialbohrungen 17 ausgestaltet sind. Um eine Vermischung von frischem Kühlmedium und bereits erwärmten Kühlmedium zu verhindern, sind die Axialbohrungen 17 vorzugsweise zwischen den ebenfalls im Stützabschnitt 13 angeordneten Verteilkanälen 15 angeordnet. Zudem sollte das erste Verteilelement 12A - anders als die weiteren Verteilelemente 12B bis 12E - keine Axialbohrungen 17 aufweisen, um eine Rückströmung von bereits erwärmtem Kühlmedium zu verhindern.

In Fig. 2 ist weiterhin erkennbar, dass die Länge L_{A} des Verteilelements 12A dem Abstand L_{B} zwischen den Ebenen 6A, 6B von zwei benachbarten Dorngruppen 5A, 5B entspricht. Auf dieser Weise kann das Verteilelement 12A individuell an die jeweilige Dorngruppe 5A und insbesondere an die Lage der Einlässe 10 und Auslässe 11 dieser Dorngruppe 5A angepasst werden. Bei Dornrädern 1 mit mehr als zwei Dorngruppen 5A bis 5F können mehrere Verteilelemente 12A bis 12E hintereinander in die hohle Dornradwelle 2 eingeschoben werden und gemeinsam eine durchgehende Zuleitung (durch die Innenkanäle 14) bzw. eine durchgehende Ableitung (durch die Außenkanäle 16 / Axialbohrungen 17) für das Kühlmedium bilden. Das Dornrad 1 weist schließlich ein (nur in Fig. 1 dargestelltes) Endstück 18 auf, welches den Innenkanal 11 des letzten Verteilelements 12E dichtend abschließt und das durch den Außenkanal 16 des letzten Verteilelements 12E strömende Kühlmedium in einem zentral angeordneten Ablaufkanal 19 sammelt und von dort zu dem Ablauf 8 des Dornrades 1 leitet.

### Bezugszeichenliste:

- 1:: Dornrad
- 2:: Dornradwelle
- 3:: Mittelachse
- 4:: Dorn
- 5A - 5F:: Dorngruppe
- 6A - 6F:: Ebene
- 7:: Zulauf (für Kühlmedium)
- 8:: Ablauf (für Kühlmedium)
- 9:: Hohlraum
- 9A, 9B:: Kühlkanal
- 10:: Einlass
- 11:: Auslass
- 12A - 12E:: Verteilelement
- 13:: Stützabschnitt
- 14:: Innenkanal
- 15:: Verteilkanal
- 16:: Außenkanal
- 17:: Axialbohrung
- 18:: Endstück
- 19:: Ablaufkanal
- D_{A}:: Außendurchmesser (im Bereich des Stützabschnittes 13)
- Dₐ:: Außendurchmesser (im Bereich des Außenkanals 16)
- D_{I}:: Innendurchmesser (der Dornradwelle 2)
- L_{A}:: Länge (des Verteilelements 12)
- L_{B}:: Abstand (zwischen den Ebenen 6)

## Patentansprüche

1. Dornrad (1) zur Herstellung von Verpackungen, umfassend:
- eine Dornradwelle (2) mit einer Mittelachse (3),
- mehrere an der Dornradwelle (2) befestigte Dorne (4),
- einen Zulauf (7) für ein Kühlmedium,
- einen Ablauf (8) für das Kühlmedium, und
- wenigstens ein separates Verteilelement (12A), das alle Einlässe (10) einer Dorngruppe (5A) mit dem Zulauf (7) verbindet und das alle Auslässe (11) derselben Dorngruppe (5A) mit dem Ablauf (8) verbindet,
- wobei die Dorne (4) wenigstens zwei Dorngruppen (5A - 5F) bilden, deren Dorne (4) jeweils in einer Ebene (6A - 6F) senkrecht zur Mittelachse (3) der Dornradwelle (2) angeordnet sind,
- wobei jeder Dorn (4) einen Hohlraum (9) für das Kühlmedium aufweist, der mit einem Einlass (10) und mit einem davon getrennten Auslass (11) verbunden ist,
- wobei die Dornradwelle (2) eine Hohlwelle ist, und
- wobei das Verteilelement (12A - 12E) in der Dornradwelle (2) angeordnet ist,
**dadurch gekennzeichnet, dass**
mehrere Verteilelemente (12A - 12E) vorgesehen sind.

2. Dornrad nach Anspruch 1,
**dadurch gekennzeichnet, dass**
das Verteilelement (12A - 12E) wenigstens einen Stützabschnitt (13) aufweist, dessen Außendurchmesser (D_{A}) etwa dem Innendurchmesser (D_{I}) der Dornradwelle (2) entspricht.

3. Dornrad nach Anspruch 1 oder 2,
**dadurch gekennzeichnet, dass**
das Verteilelement (12A - 12E) einen axial verlaufenden Innenkanal (14) aufweist.

4. Dornrad nach Anspruch 3,
**dadurch gekennzeichnet, dass**
das Verteilelement (12A - 12E) wenigstens einen von dem Innenkanal (14) abzweigenden und radial verlaufenden Verteilkanal (15) aufweist.

5. Dornrad nach einem der Ansprüche 1 bis 4,
**dadurch gekennzeichnet, dass**
das Verteilelement (12A - 12E) wenigstens einen axial verlaufenden Außenkanal (16) aufweist.

6. Dornrad nach Anspruch 5,
**dadurch gekennzeichnet, dass**
der Außenkanal (16) wenigstens abschnittsweise als umlaufender Absatz ausgestaltet ist, dessen Außendurchmesser (Dₐ) geringer ist als der Innendurchmesser (D_{I}) der Dornradwelle (2).

7. Dornrad nach Anspruch 5 oder Anspruch 6,
**dadurch gekennzeichnet, dass**
der Außenkanal (16) wenigstens abschnittsweise als Axialbohrung (17) ausgestaltet ist.

8. Dornrad nach einem der Ansprüche 1 bis 7,
**dadurch gekennzeichnet, dass**
die Länge (L_{A}) des Verteilelements (12A - 12E) dem Abstand zwischen den Ebenen (L_{B}) von zwei benachbarten Dorngruppen (5A - 5F) entspricht.

9. Dornrad nach einem der Ansprüche 1 bis 8,
**dadurch gekennzeichnet, dass**
der Hohlraum (9) für das Kühlmedium durch zwei miteinander verbundene Kühlkanäle (9A, 9B) gebildet wird.

10. Dornrad nach einem der Ansprüche 1 bis 9,
**dadurch gekennzeichnet, dass**
der Zulauf (7) für das Kühlmedium und der Ablauf (8) für das Kühlmedium an gegenüberliegenden Enden der Dornradwelle (2) angeordnet sind.

11. Dornrad nach einem der Ansprüche 1 bis 10,
**dadurch gekennzeichnet, dass**
das Dornrad (1) wenigstens zwei, insbesondere wenigstens vier oder wenigstens sechs Dorngruppen (5A - 5F) umfasst.

12. Dornrad nach einem der Ansprüche 1 bis 11,
**dadurch gekennzeichnet, dass**
jede Dorngruppe (5A - 5F) wenigstens vier Dorne (4), insbesondere wenigstens sechs Dorne (4) umfasst.

## Claims

1. Mandrel wheel (1) for manufacturing packages, comprising:
- a mandrel wheel shaft (2) with a central axis (3),
- a plurality of mandrels (4) secured to the mandrel wheel shaft (2),
- an inflow (7) for a cooling medium,
- an outflow (8) for the cooling medium and
- at least one separate distribution element (12A), which connects all inlets (10) of a mandrel group (5A) to the inflow (7) and which connects all outlets (11) of the same mandrel group (5A) to the outflow (8),
- wherein the mandrels (4) form at least two mandrel groups (5A - 5F), whose mandrels (4) are each arranged in a plane (6A - 6F) perpendicular to the central axis (3) of the mandrel wheel shaft (2),
- wherein each mandrel (4) has a hollow space (9) for the cooling medium, which is connected to an inlet (10) and to an outlet (11) separated therefrom,
- wherein the mandrel wheel shaft (2) is a hollow shaft, and
- wherein the distribution element (12A - 12E) is arranged in the mandrel wheel shaft (2), **characterised in that** a plurality of distribution elements (12A - 12E) are provided.

2. Mandrel wheel according to claim 1, **characterised in that** the distribution element (12A - 12E) has at least one support section (13), whose outer diameter (D_{A}) corresponds roughly to the inner diameter (D_{I}) of the mandrel wheel shaft (2).

3. Mandrel wheel according to claim 1 or 2, **characterised in that** the distribution element (12A - 12E) has an axially running inner channel (14).

4. Mandrel wheel according to claim 3, **characterised in that** the distribution element (12A - 12E) has at least one distribution channel (15) branching off from the inner channel (14) and running radially.

5. Mandrel wheel according to any one of claims 1 to 4, **characterised in that** the distribution element (12A - 12E) has at least one axially running outer channel (16).

6. Mandrel wheel according to claim 5, **characterised in that** the outer channel (16) is configured at least in sections as a circumferential offset, whose outer diameter (Dₐ) is smaller than the inner diameter (Di) of the mandrel wheel shaft (2).

7. Mandrel wheel according to claim 5 or claim 6, **characterised in that** the outer channel (16) is configured at least in sections as an axial borehole (17).

8. Mandrel wheel according to any one of claims 1 to 7, **characterised in that** the length (L_{A}) of the distribution element (12A - 12E) corresponds to the distance between the planes (L_{B}) of two adjacent mandrel groups (5A - 5F).

9. Mandrel wheel according to any one of claims 1 to 8, **characterised in that** the hollow space (9) for the cooling medium is formed by two cooling channels (9A, 9B) connected to one another.

10. Mandrel wheel according to any one of claims 1 to 9, **characterised in that** the inflow (7) for the cooling medium and the outflow (8) for the cooling medium are arranged at opposing ends of the mandrel wheel shaft (2).

11. Mandrel wheel according to any one of claims 1 to 10, **characterised in that** the mandrel wheel (1) comprises at least two, in particular at least four or at least six mandrel groups (5A - 5F).

12. Mandrel wheel according to any one of claims 1 to 11, **characterised in that** each mandrel group (5A - 5F) comprises at least four mandrels (4), in particular at least six mandrels (4).

## Revendications

1. Roue à mandrins (1) servant à fabriquer des emballages, comportant :
- un arbre de roue à mandrins (2) pourvu d'un axe central (3),
- plusieurs mandrins (4) fixés sur l'arbre de roue à mandrins (2),
- une arrivée (7) pour un milieu de refroidissement,
- une évacuation (8) pour le milieu de refroidissement, et
- au moins un élément de distribution (12A) qui relie toutes les entrées (10) d'un groupe de mandrins (5A) à l'arrivée (7) et qui relie toutes les sorties (11) du même groupe de mandrins (5A) à l'évacuation (8),
- les mandrins (4) formant au moins un groupe de mandrins (5A - 5F), dont les mandrins (4) sont disposés dans un plan (6A - 6F) de manière perpendiculaire par rapport à l'axe central (3) de l'arbre de roue à mandrins (2),
- chaque mandrin (4) comportant un espace creux (9) pour le milieu de refroidissement, lequel espace creux est relié à une entrée (10) et à une sortie (11) séparée de cette dernière,
- l'arbre de roue à mandrins (2) étant un arbre creux, et
- l'élément de distribution (12A - 12E) étant agencé dans l'arbre de roue à mandrins (2),
**caractérisée en ce que**
l'on prévoit plusieurs éléments de distribution (12A - 12E).

2. Roue à mandrins selon la revendication 1,
**caractérisée en ce que**
l'élément de distribution (12A - 12E) présente au moins une section d'appui (13), dont le diamètre extérieur (D_{A}) correspond environ au diamètre intérieur (D_{I}) de l'arbre de roue à mandrins (2).

3. Roue à mandrins selon la revendication 1 ou 2,
**caractérisée en ce que**
l'élément de distribution (12A - 12E) présente un canal intérieur (14) s'étendant axialement.

4. Roue à mandrins selon la revendication 3,
**caractérisée en ce que**
l'élément de distribution (12A - 12E) présente au moins un canal de distribution (15) s'étendant radialement et branché en dérivation depuis le canal intérieur (14).

5. Roue à mandrins selon l'une des revendications 1 à 4,
**caractérisée en ce que**
l'élément de distribution (12A - 12E) présente au moins un canal extérieur (16) s'étendant axialement.

6. Roue à mandrins selon la revendication 5,
**caractérisée en ce que**
le canal extérieur (16) est conçu, au moins par sections, en tant qu'épaulement circonférentiel, dont le diamètre extérieur (Dₐ) est inférieur au diamètre intérieur (Di) de l'arbre de roue à mandrins (2).

7. Roue à mandrins selon la revendication 5 ou la revendication 6,
**caractérisée en ce que**
le canal extérieur (16) est conçu, au moins par sections, en tant qu'alésage axial (17).

8. Roue à mandrins selon l'une des revendications 1 à 7,
**caractérisée en ce que**
la longueur (L_{A}) de l'élément de distribution (12A - 12E) correspond à la distance entre les plans (L_{B}) des deux groupes de mandrins adjacents (5A - 5F).

9. Roue à mandrins selon l'une des revendications 1 à 8,
**caractérisée en ce que**
l'espace creux (9) pour le milieu de refroidissement est formé par deux canaux de refroidissement (9A, 9B) reliés l'un à l'autre.

10. Roue à mandrins selon l'une des revendications 1 à 9,
**caractérisée en ce que**
l'arrivée (7) pour le milieu de refroidissement et l'évacuation (8) pour le milieu de refroidissement sont agencées sur les extrémités opposées de l'arbre de roue à mandrins (2).

11. Roue à mandrins selon l'une des revendications 1 à 10,
**caractérisée en ce que**
la roue à mandrins (1) comporte au moins deux, notamment au moins quatre ou au moins six groupes de mandrins (5A - 5F).

12. Roue à mandrins selon l'une des revendications 1 à 11,
**caractérisée en ce que**
chaque groupe de mandrins (5A - 5F) comporte quatre mandrins (4), notamment au moins six mandrins (4).
